# EUROPEAN PATENT APPLICATION

(11) **EP 3 594 676 A1**
(43) Date of publication of application: **15.01.2020**
(21) Application number: 19185222.7
(22) Date of filing: 09.07.2019
(51) Int. Cl.: G01N 27/90

(54) **SUBSEA WELD INSPECTION SYSTEM AND METHOD**

(30) Priority: 09.07.2018 GB 201811199
(71) Applicant: Westerton Access Limited, East Tullos, Aberdeen, AB12 3BQ (GB)
(72) Inventor: BRUNTON, Paul Arthur, Aberdeen, Aberdeenshire AB12 3BQ (GB); PIETRANEK, Louis Michal, Aberdeen, Aberdeenshire AB12 3BQ (GB); HEPBURN, Andrew, Aberdeen, Aberdeenshire AB12 3BQ (GB)
(74) Representative: Creation IP Ltd

(57) **Abstract**

A weld inspection system for inspecting welds in subsea structures is described. The system comprises an ROV, a video camera and a manoeuvrable arm mounted on said ROV, an eddy current probe mounted on said arm, the ROV having a control unit for connecting electrical power and communication cables between said ROV and a monitoring and signal processing station.

In use, when the ROV is deployed to inspect the subsea structure, the ROV is manoeuvred so that the arm forces the eddy current probe into contact with a weld to be inspected and the eddy current and video camera output signals are transmitted to said monitoring and signal processing station where said eddy current signal and said video camera signals are correlated and displayed.

## Description

### Field

The present invention relates to an improved weld inspection system and to a method of inspecting welds and particularly, but not exclusively, welds on subsea structures used in the offshore oil and gas industry.

### Background

Weld inspection of offshore oil and gas rigs is essential from a safety requirement. Weld defects such as cracks can lead to structural failure with potentially catastrophic effects. Currently weld inspection is performed by a diver who first cleans the weld surface then uses inspection devices such as ultrasonic or eddy current probes or magnetic particle detectors to inspect the weld. The diver may also carry a video camera to record the location of the weld.

The outputs of the probe and camera are fed to the surface for analysis. If a defect is found the diver has to physically mark the location of the defect. The diver-based inspection process is time consuming and necessary to comply with HSE regulations which also demand large administrative resources in terms of safety and training procedures.

Successful inspection is also dependent on the skill of the diver in performing the inspection where skill variation can lead to inconsistent results; defects may be missed.

Furthermore there is no audit trail of results and HSE rules limit the amount of time a diver can spend in the water and weather conditions in which the diver can dive.

### Summary

According to a first aspect of the invention there is provided a weld inspection system for inspecting welds in subsea structures, said system comprising,
an ROV, a video camera and a manoeuvrable arm mounted on said ROV, an eddy current probe mounted on said arm, the ROV having a control unit for connecting electrical power and communication cables between said ROV and a monitoring and signal processing station whereby, in use, when the ROV is deployed to inspect the subsea structure, the ROV is manoeuvred so that the arm forces the eddy current probe into contact with a weld to be inspected and the eddy current and video camera output signals are transmitted to said monitoring and signal processing station where said eddy current signal and said video camera signals are correlated and displayed.

Conveniently the monitoring and signal processing station includes a digital computer with a visual display unit. Preferably the computer is a portable computer.

Conveniently the arm has a spring-biased portion for forcing the probe into contact with the weld surface.

Preferably the eddy current probe has a 40mm diameter head. Alternatively, the probe head diameter may be any other suitable size for weld inspection such as 20mm or 10mm.

Conveniently the portable computer provides a record or log of each weld inspection and this log can be stored or transmitted to another location by cables or wirelessly.

Preferably the visual display unit is configured to display a video of the weld inspected with the eddy current probe output of the weld inspection side by side.

Preferably also the ROV carries a marking device which can be controlled from the monitoring and signal processing station to place a mark on the weld at a location where a defect is identified during a weld inspection. This marking device may be a paint marker for marking the weld defect location with a colour to allow subsequent rapid identification of the location for future investigations and/or weld repairs.

Conveniently also the ROV control unit includes separate control units for the eddy current probe and for the manoeuvrable arm. The video camera is coupled to the computer via the ROV control unit.

Preferably the ROV cable or tether which connects the ROV to the signal processing station uses a spare twisted cable pair in the ROV control unit to provide signal and power communication. Alternatively, a separate power and communication cable may be used to connect to the arm and eddy current probe.

Preferably the ROV can be manoeuvred from the surface by a joystick coupled to the computer. Alternatively, a trackball or other control pad may be used to manoeuvre the ROV.

According to a further aspect of the invention there is provided a method of inspecting a weld in a subsea structure said method comprising the steps of,
deploying a submersible ROV, said ROV carrying a manoeuvrable arm and a video camera, said arm carrying an eddy current probe,
providing electrical power from a surface control unit to said ROV, to said video camera, to the arm and to said eddy current probe via a power and communication cable,
securing the ROV at a suitable subsea location prior to said weld inspection and manoeuvring the arm from a surface control station to cause the arm to force the eddy current probe into contact with the weld to be inspected,
actuating the eddy current probe to generate and detect eddy currents,
manoeuvring the arm to move the eddy current probe along the path of the weld to be inspected whilst the arm forces said probe to remain in contact with the weld,
monitoring the output of the eddy current probe as it is moved along the weld and simultaneously recording an image of said weld by said video camera,
transmitting the eddy current output and said video image to the surface via said communication cable,
processing the eddy current output and the video camera output in a computer on the surface and correlating the eddy current output with the video camera output and displaying the correlated video output and eddy current output from the weld inspection on a visual display screen.

Preferably the method includes displaying the eddy current output and the video image of the inspected weld side by side on the same visual display screen.

Conveniently the method includes the step of recording and /or storing the eddy current and video camera outputs.

Conveniently the probe is biased into contact with the weld by a spring force.

Conveniently the method uses a spare twisted cable pair in the ROV electronics unit to transmit power and signals to the arm and to the probe. Alternatively, power and signal data are transmitted on a separate cable.

Preferably the method includes the step of marking the location of a weld defect. Advantageously the step of marking the weld defect location uses a paint marker.

Preferably also, manoeuvring of the arm from a surface control unit is achieved using a joystick coupled to said computer.

Preferably also the method includes the step of calibrating the probe to indicate a defect of greater than a predetermined size on said eddy current output display. Conveniently this predetermined defect size is 10mm.

Preferably also the method includes providing an indication in the eddy current output display if the eddy current probe has inadequate contact with the weld surface.

According to a further aspect of the invention there is provided an eddy current probe assembly for inspecting welds, said assembly comprising a manoeuvrable arm and an eddy current probe carried by said arm, said eddy current probe assembly being adapted to be coupled to a control unit for manoeuvring said arm to force the eddy current probe into contact with the weld being inspected, and being adapted to be coupled to a computer for displaying the eddy current output on a display screen.

Preferably the assembly includes a video camera having an output also coupled to said computer.

Preferably also the video camera output is correlated with the eddy current output and displayed side by side on said display screen. Conveniently the display is recordable and /or storable.

### Brief Description of the Drawings

These and other aspects of the present invention will become apparent from the following description when taken in combination with the accompanying drawings in which :-
Fig.1 is a diagrammatic view of a weld inspection system in accordance with an embodiment of the invention;
Fig.2 is a schematic diagram of the power and communication circuit for the eddy current probe and arm shown in Fig.1;
Fig.3a and Fig.3b depict diagrammatic illustrations of the eddy current probe of Fig.1 in contact with flat weld surfaces to be inspected;
Fig.3c is similar to Figs. 3a,b but showing the eddy current probe in contact with a rounded weld surface;
Fig.3d is an illustration of weld inspection paths required for different weld sizes and geometries, and
Fig.4 shows a computer screen display of the outputs of the eddy current probe and video camera of an inspected weld displayed side by side and showing the location of defects in the weld.

### Detailed Description of the Drawings

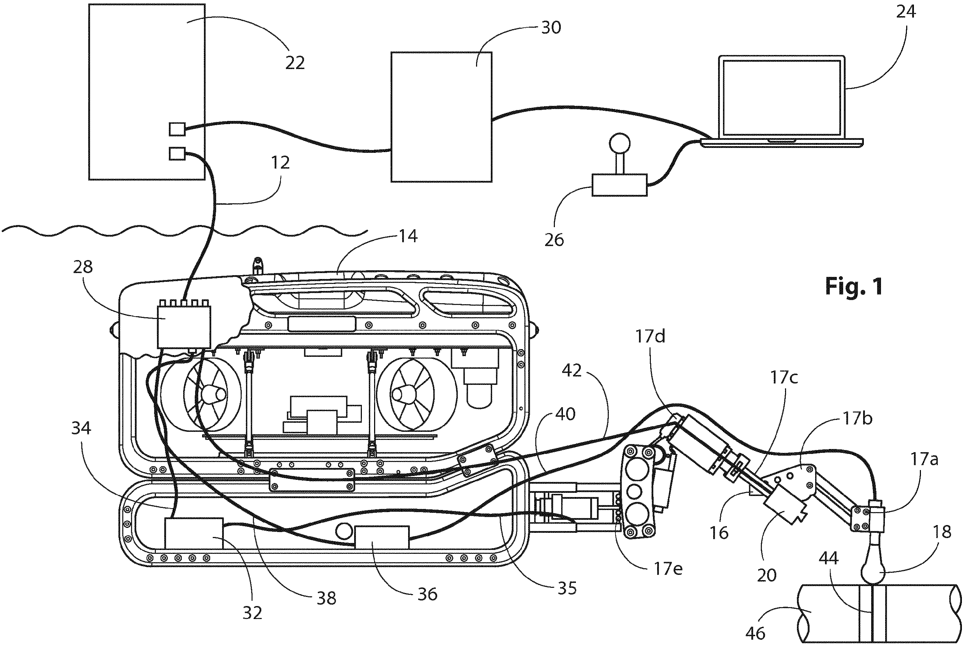

Reference is first made to Fig.1 of the drawings which depicts a diagrammatic view of a weld inspection system in accordance with an embodiment of the invention. The weld inspection system comprises a control unit 10 usually located on the deck of a vessel such as a semi-submersible or jack-up rig or platform (not shown in the interest of clarity) and which is connected by a power and communication cable 12 or tether to a submerged ROV 14 which carries a manoeuvrable spring biased manipulator arm 16 and which, in turn, carries an eddy current probe 18. The manipulator arm 16 also carries a video camera 20 which is also connected via the ROV 14 to the control unit 10. The control unit 10 is usually located in a container on the deck of the vessel and comprises an ROV submersible control unit (SCU) 22 and a computer, usually in the form of an eddy current control laptop 24. The ROV submersible control unit 22 allows the ROV 14 and arm 16 to be electrically powered from the surface and also manoeuvred using a joystick 26 connected to a USB port in the eddy current laptop. The ROV control unit 22 is also connected to the laptop computer 24 via an RS 232 to 485 converter 30.

The ROV 14 contains an ROV e-pod 28 which is coupled to the control unit 22 via the cable/tether 12 and through which all power and signal communication from the control unit 22 passes. The ROV e-pod 28 is connected to a manipulator arm control pod 32 via a cable 34 and is also connected to an eddy current pod 36 via cable 38. The arm pod 32 connects directly to manipulator arm 16 via a cable 35. The eddy current pod 36 is connected directly to the eddy current probe 18 by cable 40. The ROV e-pod 28 is connected to the video camera 20 by cable 42.

As shown in Fig.1 the probe 18 is biased by arm 16 into contact with weld 44 to be inspected on tubular steel member 46 of a structure (not shown). The arm 16 is a five point electrical manipulator arm with joints 17a, b , c, d, and e which allow the arm 16 to be manoeuvred so that the probe 18 ,which is carried by the arm 16, is forced by a spring biasing arrangement between joints 17a and 17b to stay in contact with the surface of the weld 44 as the probe 18 is moved across the weld to be inspected, this movement being referred to as a scan.

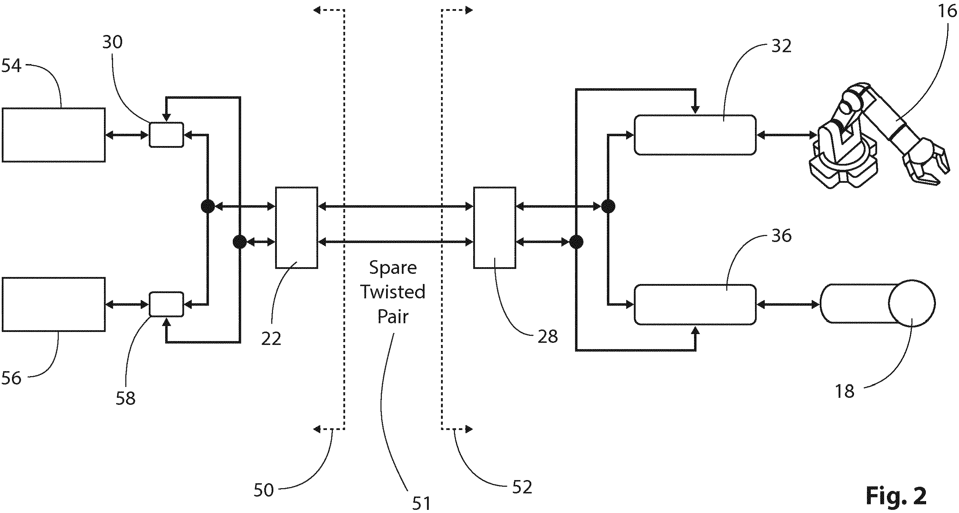

Reference is now made to Fig.2 of the drawings which depicts a schematic diagram of the power and communication circuitry for the weld inspection system shown in Fig.1. The schematic diagram shows a first portion of circuitry generally indicated by reference numeral 50 which is located in the ROV control unit 22 and which is connected via a twisted conductor cable pair 51 in cable 12 to a second circuit portion generally indicated by reference numeral 52 which includes the arm pod 32 and the eddy current pod 36. An arm PC 54 is connected by a USB connection to RS 232 to 485 converter 30 which is connected to the auxiliary port, AUX 2 port, on the ROV unit 22. An eddy current PC 56 is connected to a Sensima inspection underwater tester 58. All electrical power and data communication between the arm and eddy current control circuits and the respective arm and eddy current pods 32,36 utilises the circuit and, in particular, utilises the spare twisted conductor pair 51 in the cable 12.

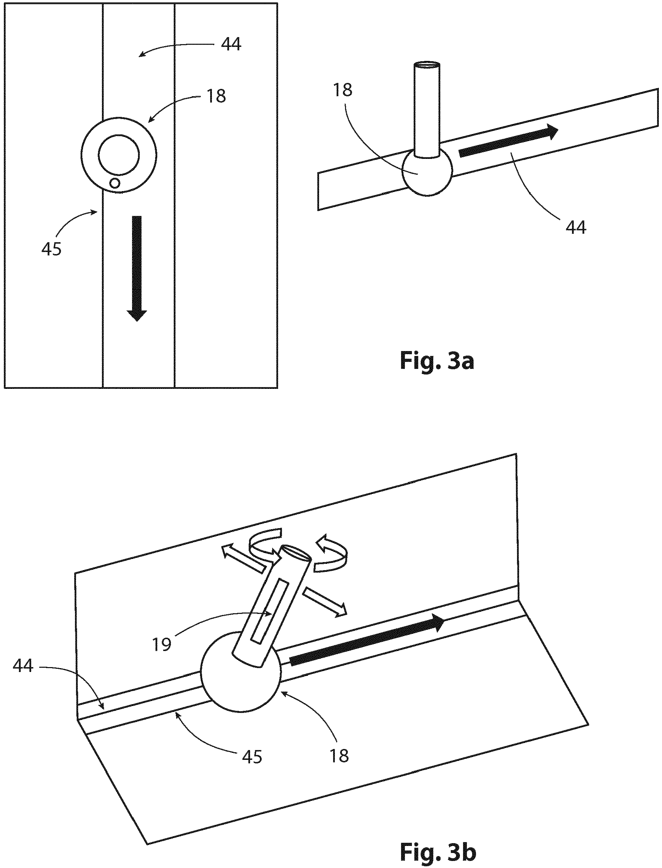

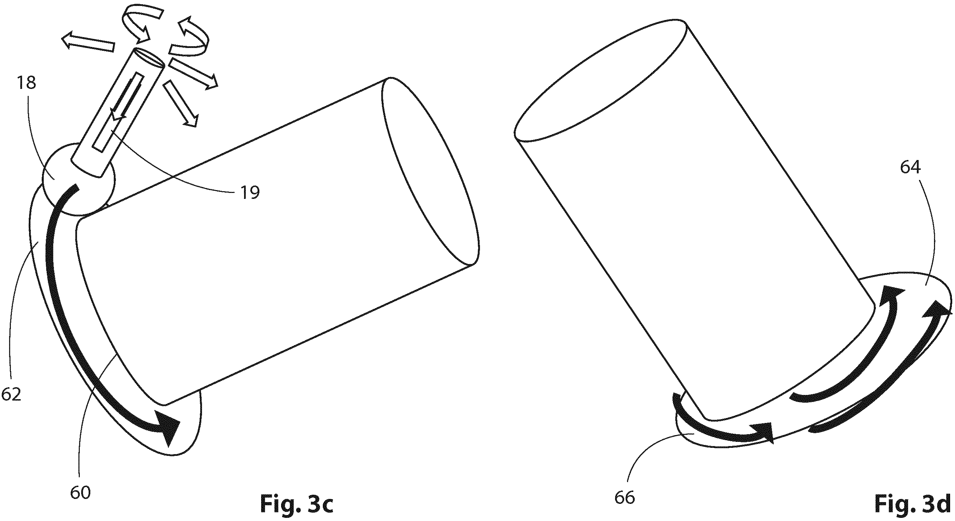

Reference is now made to Figs. 3a and 3b of the drawings which depict the eddy current probe 18 being used to scan a flat surface weld 44. Figure 3 shows the probe used on a planar flat surface weld 44. The probe is 40 mm in diameter and the probe is moved to scan the weld in the direction of the arrow. It will be understood that probe sensitivity is reduced when scanning a weld on a flat planar surface because the surface of the eddy current probe 18 has less contact with the weld and with the conductive surface. The minimum detectable defect size is only detectable with a 30 mm radius at this position on the planar surface. To ensure an accurate scan and weld inspection a minimum of two passes is recommended (one on each side of the weld) to ensure that the weld and heat affected areas 45 are covered. The probe may be tilted as shown in Fig. 3b during the scan and rotated but the angle of rotation is kept between 0 and 20 degrees to maximise signal output.

Fig. 3c shows the 40mm eddy current probe 18 used to inspect a rounded weld surface 60 with a 40 mm weld with the probe being tilted and being scanned around the weld 44 in the direction of the arrow. The probe 18 has a white orientation marker 19 which is oriented to the scan direction. The 40 mm probe will detect a defect in a radius of 50 mm when deployed on an angular or corner weld. This is because the probe has more contact with the weld and metallic surface and consequently the magnetic field is greater. The 50 mm radius means that as the probe is moved along the centre of the weld face on a 40 mm weld all areas of the weld inspected including the heat affected zone 62. In the event that a centre position is not achievable by the probe operator then additional passes of the probe may be performed to provide full coverage of the required weld areas.

Reference is now made to Fig. 3d of the drawings. Where the weld size and geometry differ the number of passes required to provide a full scan inspection of the weld will also change for example when the weld width exceeds the probe coverage multiple passes of the probe 18 are required. For example, if there is a 60 mm weld 64 as shown in Fig 3d two passes will be required. On the contrary, if the weld size is smaller than the probe diameter for example a 30 mm weld 66 then a single pass will normally be acceptable for the weld inspection.

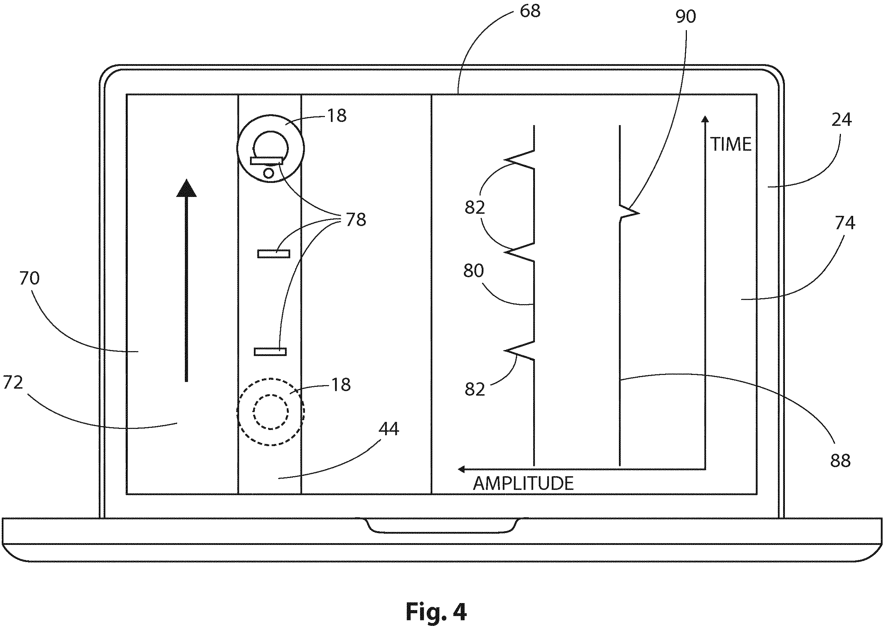

Reference is now made to figure 4 of the drawings which is an enlarged view of the display of the laptop 24 shown in figure 1. The display 68 is split into two parts; the left side of the display, generally indicated by numeral 70, shows a video camera output 72 of the weld 44 taken during the inspection and the right side 74 of the display depicts readings taken from the eddy current probe 18 as the probe is moved along the weld 44. In the left side of display the probe 18 is shown in broken outline in various positions along the weld 44 to illustrate how the probe is scanned along the weld 44 and over defects 78 which are present in the weld 44. It will be understood that the defects 78 are illustrated for diagrammatic purposes only. The display on the right side 74 shows the eddy current output 80 corresponding to the position of the probe 18 as it is moved along the weld 44. The x-axis shows signal amplitude and the y-axis time. Correlation between the left and right sides of the display shows that the signal amplitude increases or 'spikes' at positions 82 corresponding to the location of weld defects 78. Output line 88 in display side 74 shows a spike 90 where the probe has experienced a lift-off over an allowable preset 6mm limit from the weld 44.

Defects are sized using an integrated solution within software stored in the computer.The software can calculate the distance from the beginning to the end of a defect is the area scanned by the probe. The scan speed, distance and time used to calculate the defect size using this software. The crack detection length may vary but is typically between 0.2 mm by 20 mm minimum detectable crack depth/length. The defect length recorded has an accuracy between + and -2 mm and the maximum measurable crack depth is typically 10 mm.

All video footage taken during the weld inspection survey is recorded. The split screen recording system permits the collection of the ROV video footage and the eddy current system output on the same digital computer video. The recorded scan information is available for review at any time and advantageously the data collected during the weld scans can be and analysed individually for defects. This procedure ensures that the inspection process is fully auditable by a client or third party. The raw data is provided to ABS (American Bureau of Shipping) for certification purposes..Eddy current inspection is compliant with BS EN ISO 17643:2015 and the eddy current device meets the requirements of BS EN 1711:2000.

The operation of the weld inspection system as described above will now be explained. Before any weld inspection is undertaken the equipment and in particular a test probe is calibrated before and after each dive. This is achieved using a calibration block which is made of a material representative of the material under inspection and which has a variety of different size notches to simulate weld defects. Non-conductive coatings are simulated using multiples of 0.5mm plastic strips to allow for lift-off sensitivity correction. After a satisfactory calibration is performed and the equipment is ready for use it is firstly necessary to prepare the surface of the weld to be inspected. Preparation includes cleaning the surface of the weld and approximately 25 mm on either side of the weld to be free from excessive weld spatter, scale, rust, underwater growth and loose paint and/or contaminants which can reduce the inspection sensitivity. Cleaning of the weld surface is achieved by firstly using a separate ROV to remove any loose matter. Cleaning is usually done using water injection and a rotating wire brush and the cleaning procedure can take up to several days depending on the extent of the surfaces to be cleaned.

The surfaces selected are from the as-built rig or vessel drawings and a pre-weld inspection plan is marked up on each weld drawing to clearly illustrate the are covered by each scan.

The weld size and probe size determine the number of scans required. However, using the 40mm probe a minimum number of passes is generally be required to ensure full 100% coverage of the weld is achieved. The weld and adjacent parent materials are examined for a distance of between 5mm to 30mm either side of the weld using the following scan routine:
Before each inspection each weld is visually inspected and reviewed. The weld size, profile and geometry are assessed to determine the probe size required and the estimated number of passes required as well as the position of the probe during each pass

All weld scan passes are marked on a weld drawing to clearly illustrate the area covered during each scan. Multiple passes of a certain area are highlighted on the same weld drawing. Defects found are recorded on these weld drawings and mapped accordingly as the inspection progresses. The weld drawing details the size of each weld being inspected and the scan direction of the probe. The probe shape in relation to the weld size and geometry being inspected are assessed to ensure that the probe selected is suitable, and that the number of passes required is decided accurately. For example: a 50mm wide angle weld with a rounded or raised weld profile will require passes along the cap and each side of the heat affected zone as the size of profile of the weld may result in less contact with the round face of the probes.

The weld cap and heat affected zone areas are scanned longitudinally, with a longitudinal discontinuity going up at the 12 O'clock position and a transverse crack down at the 6 O'clock position. The probe is forced against the centre of the weld face and moved longitudinally to scan around or along the weld, keeping a central alignment to the weld face, as much as is reasonably achievable. As the 40mm probe can have a 50mm scan area, this central movement ensures that the full 40mm weld can been scanned, as well as the heat affected zone.

Lift off is acceptable as long as this is within the allowable limit for each probe size. (6mm for a 40mm probe and 3mm for a 20mm probe). Excessive lift-off may require additional passes and the areas inspected marked up on the weld drawings.

During inspection the ROV 14 is secured to the rig or vessel structure and this may be achieved by adjustable metal arms or hooking points, techniques well known in the art.

Additional passes may be required along the heat affected zone adjacent weld should any deviation from the centre position occur, should the operator deem additional passes are necessary to provide full inspection coverage. The white orientation marker 19 on the probe 18 remains in the direction of the scan at all times. This marker should remain within 20° in either direction from its central facing point i.e. the direction of scan. Should the orientation of the probe 18 beyond 20° either side any point of the weld, additional passes of the probe may be required to ensure complete coverage of the area.

Any excess of lift-off detected by the probe 18 is shown on the eddy current signal at location 75 displayed on the right-hand side of the display 74. The manipulator arm is controlled to move the probe 18 along the surface to ensure maximum contact with the weld surface at all times. readings. The weld inspection operation is performed in real time and the operator thus sees exactly the real-time output of the probe 18 on the display 24 and the operator can correlate the eddy current probe output with the position of the probe on the weld and identify the location of any defects as shown in Fig. 4.

Various modifications may be made to the embodiment hereinbefore described without departing from the scope of the invention. For example, instead of using a single computer screen to display the video output signal from the weld and the eddy current signal from the weld inspection to separate computer screens may be used to display the signals separately but with the displays being correlated. A separate communication and power cable may be used between the ROV and the ROV control unit instead of the spare twisted pair. A probe localisation estimate may be made from the video feed by using the software to create a C-scan of a defect area using a scan speed programmed for the arm.

Various probe sizes may be selected for weld inspection depending on the size and geometry of the weld as can be ascertained following an initial weld inspection. The manipulator arm may have any suitable number of points to permit the arm to be manipulated allowing full 3D control. The manipulator arm may also have a resilient arm portion instead of a spring which may be located between arm portions. The joystick may be replaced by a trackball, trackpad or any other suitable means of controlling the manipulator arm. The Sensima underwater tester may be replaced by another RS 232 to 485 converter like converter 30 connected between the AUX 2 output and the eddy current PC.

Advantages of the invention hereinbefore described are that a diver is not required to conduct the weld inspection and so avoids HSE complications and procedures in using divers. The use of the ROV spare twisted pair results in a single tether between the ROV control unit and the ROV which avoids entanglement problems which can arise when two or more tethers are used. The use of the spring biased manipulator arm provides more consistent contact with the weld surface and the video and eddy current output displays in real time are correlated, are recordable and are auditable and satisfy ABS certification requirements. Also, the use of existing ROVs and the circuitry facilitates rapid on-site deployment.

## Claims

1. A weld inspection system for inspecting welds in subsea structures, said system comprising,
an ROV, a video camera and a manoeuvrable arm mounted on said ROV, an eddy current probe mounted on said arm, the ROV having a control unit for connecting electrical power and communication cables between said ROV and a monitoring and signal processing station whereby, in use, when the ROV is deployed to inspect the subsea structure, the ROV is manoeuvred so that the arm forces the eddy current probe into contact with a weld to be inspected and the eddy current and video camera output signals are transmitted to said monitoring and signal processing station where said eddy current signal and said video camera signals are correlated and displayed.

2. The weld inspection system of claim 1, wherein the monitoring and signal processing station includes a digital computer with a visual display unit. Preferably the computer is a portable computer.

3. The weld inspection system of either of claims 1 or 2, wherein the arm has a spring-biased portion for forcing the probe into contact with the weld surface.

4. The weld inspection system of claim 2, wherein the visual display unit is configured to display a video of the weld inspected with the eddy current probe output of the weld inspection side by side.

5. The weld inspection system of any preceding claim, wherein the ROV carries a marking device which can be controlled from the monitoring and signal processing station to place a mark on the weld at a location where a defect is identified during a weld inspection.

6. The weld inspection system of any preceding claim, wherein the ROV control unit includes separate control units for the eddy current probe and for the manoeuvrable arm.

7. The weld inspection system of any preceding claim, wherein an ROV cable or tether which connects the ROV to the signal processing station uses a spare twisted cable pair in the ROV control unit to provide signal and power communication.

8. A method of inspecting a weld in a subsea structure said method comprising the steps of,
deploying a submersible ROV, said ROV carrying a manoeuvrable arm and a video camera, said arm carrying an eddy current probe,
providing electrical power from a surface control unit to said ROV, to said video camera, to the arm and to said eddy current probe via a power and communication cable,
securing the ROV at a suitable subsea location prior to said weld inspection and manoeuvring the arm from a surface control station to cause the arm to force the eddy current probe into contact with the weld to be inspected,
actuating the eddy current probe to generate and detect eddy currents, manoeuvring the arm to move the eddy current probe along the path of the weld to be inspected whilst the arm forces said probe to remain in contact with the weld,
monitoring the output of the eddy current probe as it is moved along the weld and simultaneously recording an image of said weld by said video camera,
transmitting the eddy current output and said video image to the surface via said communication cable,
processing the eddy current output and the video camera output in a computer on the surface and correlating the eddy current output with the video camera output and displaying the correlated video output and eddy current output from the weld inspection on a visual display screen.

9. The method of claim 8, wherein the method includes displaying the eddy current output and the video image of the inspected weld side by side on the same visual display screen.

10. The method of either of claims 8 or 9, wherein the probe is biased into contact with the weld by a spring force.

11. The method of any preceding claim, wherein the method uses a spare twisted cable pair in an ROV electronics unit to transmit power and signals to the arm and to the probe.

12. The method of any preceding claim, wherein the method includes the step of marking the location of a weld defect.

13. The method of any preceding claim, wherein the method includes the step of calibrating the probe to indicate a defect of greater than a predetermined size on said eddy current output display.

14. The method of any preceding claim, wherein the method includes providing an indication in the eddy current output display if the eddy current probe has inadequate contact with the weld surface.

15. An eddy current probe assembly for inspecting welds, said assembly comprising a manoeuvrable arm and an eddy current probe carried by said arm, said eddy current probe assembly being adapted to be coupled to a control unit for manoeuvring said arm to force the eddy current probe into contact with the weld being inspected, and being adapted to be coupled to a computer for displaying the eddy current output on a display screen.
